# DEMANDE DE BREVET EUROPEEN

(11) **EP 1 705 906 A1**
(43) Date de publication de la demande: **27.09.2006**
(21) Numéro de dépôt: 05101711.9
(22) Date de dépôt: 04.03.2005
(51) Int. Cl.: H04N 5/445, H04N 7/167, H04N 7/16

(54) **Procédé de traitement d'une grille d'événements diffusés par un fournisseur**

(71) Demandeur: Nagravision S.A., 1033 Cheseaux-sur-Lausanne (CH)
(72) Inventeur: Stransky, Philippe, 1033 Cheseaux-sur-Lausanne (CH)
(74) Mandataire: Wenger, Joel-Théophile

(57) **Abrégé**

Cette demande concerne l'affichage d'une liste d'événements télévisuels et leurs modes d'accès.

Cette demande concerne un procédé de traitement d'une liste d'événements diffusés par un fournisseur notamment d'événements de télévision à péage, cette grille étant destinée à être affichée sur au moins une unité multimédia, comportant les étapes suivantes :
-création et diffusion à destination de l'unité multimédia, d'une première liste des événements diffusés par ledit fournisseur, cette liste comprenant au moins des données descriptives des événements et un identifiant de l'événement;

ce procédé étant caractérisé en ce qu'il comprend les étapes additionnelles suivantes:
-création et diffusion d'une seconde liste comprenant pour un identifiant d'événement donné, au moins un identifiant de mode de souscription,
-création et diffusion d'une troisième liste comprenant pour chaque identifant de mode de souscription, des données descriptives dudit mode de souscription

## Description

### DOMAINE TECHNIQUE

La présente invention concerne le domaine de l'accès par des abonnés à des contenus à accès conditionnel, que ce soit par la voie de la télévision ou un quelconque terminal multimédia.

### ETAT DE LA TECHNIQUE

Dans les systèmes actuels, l'offre télévisuelle est affichée sur une grille de programme avec les informations permettant d'identifier chaque programme ou événement par l'heure de diffusion, le canal de diffusion et une description sommaire tel que "Star War II".

La comptabilisation de l'utilisation de tels événements est aujourd'hui basée sur le principe de l'abonnement, de l'achat d'événements ou du paiement par unité de temps.

L'abonnement permet de définir un droit associé à un ou des canaux de diffusion transmettant ces événements et permet à l'utilisateur d'obtenir ces canaux en clair si le droit est présent dans son module de sécurité.

Parallèlement, il est possible de définir des droits propres à un événement, tel qu'un film ou un match de football. L'utilisateur peut acquérir ce droit (achat par exemple) et cet événement sera spécifiquement géré par ce droit. Cette méthode est connue sous l'appellation "pay-per-view" (PPV).

Lorsque l'on souhaite rendre visible à un utilisateur, la liste des canaux ou services ou des événements auxquels il a accès, de même que ceux pour lesquels il peut se procurer les droits, les principes décrits ci-dessus sont également utilisés. Pour ceci, on utilise un guide électronique (EPG = Electronic Program Guide) et l'on affiche, par exemple en vert, les événements ou canaux pour lesquels les droits sont déjà acquis et en rouge ceux pour lesquels les droits ne sont pas acquis.

Lorsque la caractérisation des droits est simple, par exemple lorsque l'utilisateur est abonné à certains services prédéfinis pour une durée de validité déterminée, il est aisé de générer un EPG qui tienne compte de ces droits. Par contre, lorsque l'on souhaite gérer des droits plus complexes, réaliser des offres promotionnelles ou utiliser des conditions qui n'ont pas été prévues dans l'abonnement, les systèmes actuels ne permettent pas de gérer facilement ces éléments.

De plus, avec l'avènement d'offres faites sur-mesure telle que la diffusion de la série "Star War", le système de grille montre sa limite. En effet, le même film peut être proposé de plusieurs manières, par exemple par abonnement à la chaîne "Science Fiction", par abonnement au bouquet "Fiction", par une offre limitée à 3 mois ou une offre spéciale "Star War". La diversité de ces offres fait que le système actuel d'information au client est basé essentiellement sur des dépliants papier qui résument les conditions de chacune de ces offres.

La demande internationale de brevet WO 97/42762 décrit un système d'accès à des informations, qui peut être utilisé notamment dans le domaine de la télévision à péage. Dans ce système, des messages d'autorisations sont envoyés aux décodeurs des utilisateurs. Ces messages contiennent, de façon conventionnelle, les droits d'accès aux événements de télévision à péage. Ils contiennent en outre des pointeurs qui indiquent un emplacement permettant d'obtenir des informations additionnelles. Ces informations additionnelles peuvent être en particulier des informations en clair concernant les événements eux-mêmes ou des logiciels. Ces informations sont liées au décodeur et sont généralement accessibles sans déchiffrement. Elles sont essentiellement informatives car les données contenues dans la grille sont nécessairement concises.

Ainsi, lorsqu'un fournisseur de contenus permet d'accéder au même événement de diverses manières, aucune solution satisfaisante n'est proposée par l'état de la technique.

### BREVE EXPOSE DE L'INVENTION

Le but de l'invention est atteint par un procédé de traitement d'une liste d'événements diffusés par un fournisseur notamment d'événements de télévision à péage, cette grille étant destinée à être affichée sur au moins une unité multimédia, comportant les étapes suivantes :
- création et diffusion à destination de l'unité multimédia, d'une première liste des événements diffusés par ledit fournisseur, cette liste comprenant au moins des données descriptives des événements et un identifiant de l'événement;
ce procédé étant caractérisé en ce qu'il comprend les étapes additionnelles suivantes:
- création et diffusion d'une seconde liste comprenant pour un identifiant d'événement donné, au moins un identifiant de mode de souscription,
- création et diffusion d'une troisième liste comprenant pour chaque identifant de mode de souscription, des données descriptives dudit mode de souscription

Ainsi, la diffusion de trois listes permet de relier d'une manière dynamique et en-ligne les diverses manières d'accéder à un événement. En effet, la première liste est la liste classique telle que connue à ce jour pour la composition d'un EPG. La troisième liste est l'énumération des différents modes de souscription, soit les différents modes pour avoir accès à cet événement. La seconde liste permet de faire le lien entre ces deux listes et de faire une sélection parmi la liste exhaustive des modes de souscription, celles qui s'appliquent à un événement donné.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre la liste des programmes telle que connue généralement par les téléspectateurs,
- la figure 2 illustre le contenu de la première liste,
- la figure 3 illustre le contenu de la seconde liste,
- la figure 4 illustre le contenu de la troisième liste
- la figure 5 illustre le contenu de la quatrième liste

### DESCRIPTION DETAILLEE

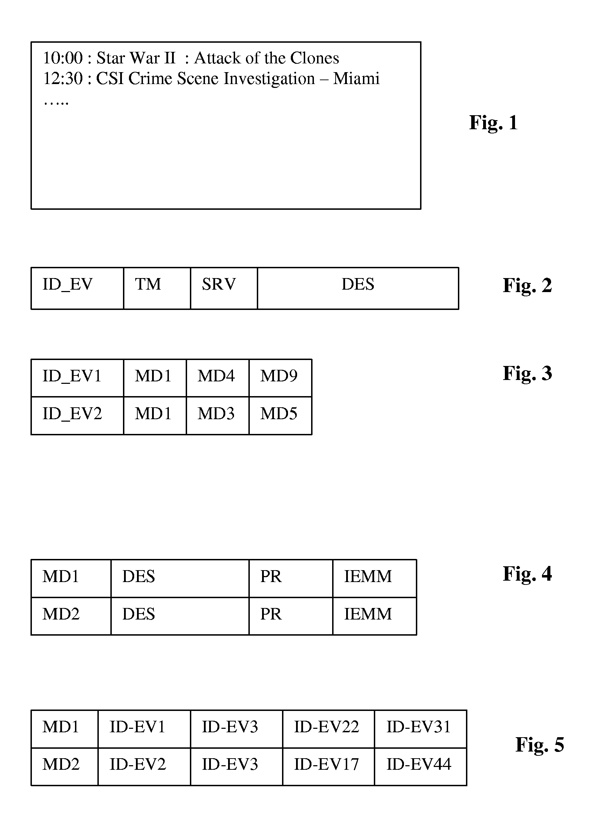

La formation de la grille de programmes (ou d'événements) telle qu'illustrée à la figure 1 est bien connu et fait partie des données transmises de longue date dans les flux de télévision. Ces données sont nécessaires au téléspectateur afin de se retrouver dans l'offre pléthorique accessible sur un satellite.

La version illustrée est une version minimale comprenant au moins l'heure de diffusion et le titre de l'événement. D'autres informations peuvent être ajoutées telles que le canal de diffusion (ou service), l'accès libre ou conditionnel, voire un lien vers plus d'information sur cet événement. Ce lien peut permettre de visualiser une partie de l'événement, d'obtenir un résumé de l'événement ou des informations sur les acteurs.

La figure 2 montre un exemple des données transmises permettant de former une telle grille. A chaque événement est attribué un identifiant d'événement ID_EV, l'heure de diffusion TM, le canal ou service de diffusion SRV et une brève description DES. D'autres informations peuvent être ajoutées pour exécuter les fonctions annexes décrites ci-dessus.

La figure 3 montre la deuxième liste qui permet de faire le lien entre un événement et les différents modes de souscription. Ainsi selon notre exemple, l'événement référencé sous ID_EV1 est accessible selon trois modes de souscription, respectivement MD1, MD4 et MD9.

La figure 4 illustre la troisième liste qui permet l'affichage des modes de souscription. A chaque mode MD1, MDn est associé un descriptif et accessoirement un prix.

Prenons l'exemple d'un match de football référencé sous ID_EV12, il est par exemple accessible grâce à l'abonnement à la chaîne "Football". Si un téléspectateur n'est pas abonné à cette chaîne, il lui est difficile de trouver d'autres moyens pour visualiser ce match et c'est là qu'interviennent les deux listes de l'invention.

Dans la pratique, l'utilisateur disposera d'une commande pour afficher les modes de souscription. Selon notre exemple, l'événement en question est accessible selon trois modes, MD1, MD4 et MD9.

La troisième liste explicite chacun de ces modes. Par exemple le mode MD1 est l'achat unique du match souhaité. Le second mode MD 4 est la souscription au bouquet sport comprenant 3 chaînes thématiques dédiées au sport et la mode MD9 est le renouvellement de son abonnement de base pour une nouvelle année avec comme prime 3 matchs de football dont celui souhaité.

Ainsi, par une simple commande, l'utilisateur peut visualiser l'ensemble des offres télévisuelles qui va permettre l'accès à cet événement.

Selon un mode de réalisation, la troisième liste comprend une message de sécurité IEMM qui est transmis au module de sécurité de l'unité multimédia si l'utilisateur décide de souscrire à ce mode. Ce message comprend une clé ou un droit qui est chargé dans le module de sécurité afin de permettre la réception de ou des événements désirés. Cette commande est accompagnée généralement d'un débit sur le crédit de l'utilisateur et peut fonctionner entièrement en mode local. Il est également possible de générer un appel à un centre de gestion pour valider l'accès à ce droit et comptabiliser l'utilisation de cet abonné.

La figure 5 illustre une nouvelle liste qui permet l'opération inverse c'est à dire de retrouver les événements faisant partie d'un mode de souscription. Ainsi pour chaque mode de souscription MD, on trouvera la liste des identifiants ID_EV1, ID_EV3, ID_Evn.

## Revendications

1. Procédé de traitement d'une liste d'événements diffusés par un fournisseur notamment d'événements de télévision à péage, cette grille étant destinée à être affichée sur au moins une unité multimédia, comportant les étapes suivantes :
- création et diffusion à destination de l'unité multimédia, d'une première liste des événements diffusés par ledit fournisseur, cette liste comprenant au moins des données descriptives des événements et un identifiant de l'événement;
ce procédé étant **caractérisé en ce qu'**il comprend les étapes additionnelles suivantes:
- création et diffusion d'une seconde liste comprenant pour un identifiant d'événement donné, au moins un identifiant de mode de souscription,
- création et diffusion d'une troisième liste comprenant pour chaque identifant de mode de souscription, des données descriptives dudit mode de souscription.

2. Procédé selon la revendication 1, **caractérisé en ce que** la troisième liste comporte également une indication de coût correspondant audit mode de souscription.

3. Procédé selon la revendication 1 ou 2, **caractérisé en ce** quze la troisième liste comprend une message de sécurité (IEMM) contenant les moyens pour autoriser l'accès aux événements relatives à ce mode de souscription.

4. Procédé selon les revendications 1 à 3, **caractérisé en ce qu'**il comprend une quatrième liste comprenant pour chaque mode de souscription (MD1, MD2, MDn) la liste des identifiants (ID_EV) d'événements accessibles par ledit mode de souscription.
